# EUROPEAN PATENT SPECIFICATION

(11) **EP 1 106 075 B1**
(45) Date of publication and mention of the grant of the patent: **09.03.2005**
(21) Application number: 00204279.4
(22) Date of filing: 30.11.2000
(51) Int. Cl.: A23G 9/02, A23G 9/30, A23G 9/04

(54) **Ready-to-freeze mix for the preparation of frozen food products or of sorbets and preparation process thereof**
Gefrierendsfertige Vormischung zum Zubereiten von gefrorenen Nahrungsmitteln oder Sorbets und Herstellungsverfahren dafür
Mélange prêt à la congèlation pour la préparation d'aliments congelés ou de sorbets et procédé de préparation

(30) Priority: 30.11.1999 IT MI992500
(43) Date of publication of application: 13.06.2001
(73) Proprietor: I.D.F. Dolciaria S.p.A., 95010 Carruba Riposto, (Catania) (IT)
(72) Inventor: Finocchiaro, Santi, 95014 Giarre (Catania) (IT)
(74) Representative: De Gregori, Antonella

(56) References cited:
- EP-A- 0 336 462
- WO-A-94/04046
- US-A- 1 878 203
- US-A- 3 647 472
- US-A- 3 826 829
- US-A- 4 219 581
- US-A- 4 244 981
- US-A- 4 725 445
- US-A- 5 175 013
- US-A- 5 853 785

## Description

The present invention relates to an alimentary product for the preparation of a frozen product having a controlled crystallization, namely a grated-ice drink, or of a sorbet and a preparation process of said alimentary product. In particular, this product is sold and can be conserved over a period of time in non-frozen form, as a result of its specific characteristics. When placed inside a freezer, a product is obtained, like a freshly produced grated-ice drink, ready for consumption.

The so-called "Sicilian" grated-ice drink has various specific and well-defined characteristics which are: the presence of a solid phase consisting of fine ice crystals homogeneously dispersed in an aromatic liquid phase, a liquid/solid ratio not higher than 3 and not lower than 0.25, ice crystals having dimensions not greater than 150 microns.

A product with these characteristics can be artisan-produced using a specific formulation and a precise preparation technique which comprises the formation, by cooling, of a certain number of ice crystals and their subsequent dispersion in the liquid, by slow stirring in order to avoid the dimensional growth of the crystals and, at the same time, to facilitate the formation of additional crystallization seeds.

A rest period is then necessary, again under cooling conditions, to allow the passage of the seeds to crystals, followed by a subsequent further slow mechanical dispersion phase.

The typical Sicilian grated-ice drink is obtained, starting from an appropriate base formulation, by repeating this phase alternation: rest and growth, various times, under suitable temperature conditions (i.e. without ever dropping below 3°C).

A production method of this type cannot be applied industrially as the subsequent conservation necessities of the product require conservation in cold-stores at -25°C.

Conservation at -25°C is necessary for the distribution and sale of the product itself, but causes a spontaneous growth of the crystals and final total solidification.

These phenomena deprive the product of the typical solid-liquid combination and other characteristics mentioned above for Sicilian grated-ice drink, making it impossible for it to be eaten with a spoon immediately at the exit of the freezing step and making it necessary a prolonged phase of softening at room temperature.

The problem has already been faced in the state of the art and, from an industrial point of view, attempts have been made to obtain a product with the typical characteristics of the Sicilian grated-ice drink by preparing aromatized slabs of ice which are then ground; a thick, cool syrup consisting of 50% of sucrose, invert sugar and glucose syrup is subsequently added, thus obtaining a pasty product consisting of syrup and ground ice, which is distributed in small cups.

This system however only partly solves the problem relating to the formation of a completely solidified end-product and in any case, the product obtained does not have the typical characteristics of the Sicilian grated-ice drink indicated above.

Further examples are EP-A-0336462 disclosing a flavoured slush snack comprising from 22 to 33% by weight of dextrose, from 1 to 5 % by weight of fructose, from 0.05 to 0.1 % of xanthane and from 1.0% to 3% of sorbitol and US-A-3,647,472 discloses a beverage mix comprising sugar (sucrose and/or dextrose) up to a maximum of 30-40% by weight, from 0. 5 to 8 % by weight of glycerol, from 0 to 1% of a foaming agent, a small quantity (0.01%) of carragenaan and other components.

US-A-4,725,445 discloses an ice-cream confection which is an oil-in-water emulsion, while US-A-4,244,981 discloses a non diary dessert obtained aerating the mixture of ingredients.

US-A-5,853,785 concerns a dry mix for preparing a slush beverage and WO94/04046 discloses a precursor liquid for packaged ice pop produced by mixing and heating fruit juice or fruit juice concentrate water and vegetable gum and/or pectine.

The present invention therefore proposes to overcome the drawbacks present in the known art.

An objective of the present invention is consequently to obtain an alimentary product which can be statically frozen, i.e. without the necessity of mixing, with crystals 3 having dimensions less than or equal to 150 microns and with a solid/liquid ratio ranging from 0.25 to 3, having organolectic characteristics and taste completely resembling those of a freshly produced grated-ice drink.

A further of the present invention therefore objective relates to a product which is physically, chemically and microbiologically stable and which, once packaged in sterile form, can be conserved at room temperature for long periods of time and in the chain of cool (2-8°C) for longer periods of time.

An additional objective of the present invention relates to a grated-ice drink equivalent to one which is freshly produced, or to a sorbet, obtainable by static freezing of the above alimentary product.

These objects are obtained by means of an alimentary product which is in the liquid state at room temperature and/or in the chain of cool (2-8°C) and which consists of a chemically, physically and microbiologically stable mixture, conservable at room temperature and/or in the chain of cool (2-8°C) and having, after static freezing, crystals with dimensions less than or equal to 150 microns and a solid/liquid ratio ranging from 0.25 to 3, said alimentary product being prepared by means of a process which comprises the following phases:
1) preparation of a matrix comprising from 0.15% to 1% by weight of a mixture of stabilizers comprising at least one stabilizer selected from carrageenans, guar seed flour, carob seed flour, xanthane gum and/or pectin;
   from 10% to 40% by weight of an aqueous solution of sugars at 65% of solids mixed with flavourings, fruit juices and/or sapid substances;
   from 0.1% to 1.5% by weight of a mixture of crystallization retardants consisting of fluidifying agents based on glycerin and sorbitol;
   from 0% to 1.5% by weight of at least one protein derivative selected among albumines from milk and/or eggs and/or cereals and/or legumes and/or their hydrolized;
2) a pasteurization phase at a temperature higher than 82°C for a time ranging from 3 to 10 minutes;
3) a dosage and hermetic packaging phase at a temperature higher than 80°C.

The present invention also relates to a process for the preparation of an alimentary product based on syrup to be frozen, comprising a preparation phase of the matrix, a pasteurization phase and a dosage and packaging phase.

The present invention also relates to a grated-ice drink characterized in that it is obtainable by means of static freezing of the above alimentary product, in absence of the component consisting of protein derivatives.

The present invention also relates to a sorbet characterized in that it is obtainable by means of static freezing of the above alimentary product, in presence of the component consisting of protein derivatives.

In fact, the presence of the component consisting of protein derivatives allows to increase the softness of the end-product, obtaining after freezing a product having the characteristics of a sorbet.

The first advantage of the product according to the present invention is a duration of over a year.

A further advantage consists in obtaining a product characterized in that, after static freezing, i.e. without the necessity of alternating rest and mixing phases, it has the typical characteristics of an artisan-produced grated-ice drink or of a sorbet.

Owing to the particular composition, preparation process and packaging used, the product according to the present invention is therefore characterized by a control of the crystallization which allows a product to be obtained, which can be eaten with a spoon immediately at the exit of the freezing step, having the exact organolectic characteristics and taste of a freshly produced grated-ice drink or of a sorbet.

In particular, the typical liquid/solid ratio of the product according to the present invention, once statically frozen, can be indirectly observed by the consumer.

In fact, during consumption, the consumer experiences a pleasant sensation caused by a discreet melting of the ice crystals which, due to an endothermic phenomenon, withdraws heat from the mouth. This sensation is obviously pleasant because the ice crystals are not present in an excessive quantity and have small dimensions. On the contrary, in the case of the industrial grated-ice drink obtained according to the techniques of the known art, and therefore having not only large crystals, but also a high number of crystals in a non-equilibrated ratio, the heat is excessively withdrawn from the mouth, causing an unpleasant burning sensation, following the drying of the taste buds, and a sensation of excessive cold.

The characteristics and advantages of the product and process according to the present invention can be better understood by the following detailed and illustrative description.

In particular, the alimentary product according to the present invention is obtained by means of a first preparation phase of the matrix comprising from 0.15% to 1% by weight of a mixture of stabilizers comprising at least one stabilizer selected from carrageenans, guar seed flour, carob seed flour, xanthane gum and/or pectin;
from 10% to 40% by weight of an aqueous solution of sugars at 65% of solids mixed with flavourings, fruit juices and/or sapid substances;
from 0.1% to 1.5% by weight of a mixture of crystallization retardants consisting of fluidifying agents based on glycerin and sorbitol;
from 0% to 1.5% by weight of at least one protein derivative selected among albumines from milk and/or eggs and/or cereals and/or legumes and/or their hydrolized.

In particular, the matrix can preferably comprise:
from 0.15% to 0.65% by weight of a mixture of stabilizers comprising carob seed flour and pectin;
from 20% to 40% by weight of an aqueous solution of sugars at 65% of solids mixed with flavourings, fruit juices and/or sapid substances;
from 0.1% to 0.3% by weight of a mixture of crystallization retardants consisting of fluidifying agents based on glycerin and sorbitol.

The percentages are calculated with respect to the total weight of the matrix and the complement to 100% consists of water.

The matrix, more preferably, comprises from 0.15% to 0.65% by weight of a mixture of stabilizers comprising pectin and carob seed flour, from 25% to 30% by weight of the aqueous solution of sugars at 65% mixed with flavourings, fruit juices and/or sapid substances and from 0.1% to 0.3% by weight of a mixture of crystallization retardants.

In particular, the aqueous solution of sugars mixed with flavourings, fruit juices and/or sapid substances comprises, sucrose, lactose, dextrose, glucose and/or fructose syrup, as sugars and coffee extracts or milk of almonds, as sapid substances, or other aromatic natural extracts (cacao, etc.).

In particular, the mixture of stabilizers can comprise carrageenans, guar seed flour, carob seed flour or gum, xanthane gum and/or pectin; carrageenans and pectin reversibly thicken the aqueous solution without gelation, whereas guar seed flour or gum swells up in water forming stable suspensions within a wide range of pH and electrolyte concentrations. The viscosity increases linearly at low concentrations and it is therefore possible to obtain total control of the rheology of the mixture by selecting suitable dosage ratios of the various components.

Carob seed flour or gum has characteristics similar to guar seed flour or gum, while xanthane gum has the capacity of synergizing the behaviour of the previously listed gums, without causing gelation phenomena.

Pectin can be distinguished by two main characteristics: the esterification degree and length of the molecular chains.

The esterification degree determines the behaviour of pectin with respect to the ingredients necessary for thickening, whereas the length of the molecular chains acts on the consistency of the paste.

In the light of this behaviour, it has been possible to identify a particular mixture of stabilizers capable of giving the matrix and above all the end-product, the desired organolectic and physico-chemical properties.

In fact, the particular composition of the matrix of the product according to the present invention has the correct ratio between freezable fraction and non-freezable fraction. This ratio allows an alimentary product to be obtained, which, once statically frozen, has the same characteristics as an artisan-produced Sicilian grated-ice drink or of the sorbet.

The freezable fraction is correlated to the quantity of ice crystals, whereas the non-freezable fraction is correlated to the fluidity which can be given to the whole mixture.

The fluidity of the mixture must therefore be suitable regulated to prevent the composition from being plastic or gelatinous when consumed, as the product would no longer have its particular melting characteristics.

For this reason, higher sugars (tri and polysaccharides) are not added to the mixture, as, although preventing the formation of large crystals, they would create a dense matrix which would englobe the small crystals. The composition of the matrix resulting from the crystallization phase must consequently be such as to produce a low degree of viscosity, but at the same time a low degree of freezability.

These requisites contradict each other, but the product according to the present invention has the correct mix of fluidifying agents which is capable of maintaining a low viscosity and a strong crystallization retardant capacity.

In particular, the process according to the present invention has a first preparation phase of the above matrix; a pasteurization phase at a temperature of over 82°C for a time ranging from 3 to 10 minutes, preferably from 4 to 5 minutes; a dosage and hermetic packaging phase at a temperature higher than 80°C.

The pasteurization phase is extremely important for obtaining the alimentary product according to the present invention: in fact, the presence among the matrix components of fruit juices, and other sapid substances such as coffee extracts or milk of almonds or other aromatic natural extracts, requires an accurate microbiological stabilization which, however, must be obtained maintaining at the same time the taste of very sensitive raw materials such as milk of almonds and fruit juices, for example, or other aromatic natural extracts.

In fact the packaging of the alimentary product according to the present invention, in a container with a large opening, having a high contact surface with the air, is a factor which facilitates microbial contamination. On the other hand, this type of packaging is extremely important for guaranteeing a good thermal exchange both in the freezing phase in a freezer and also in the subsequent consumption phase which can require a softening (i.e. a period at room temperature) for a few minutes before consumption, to taste the end-product in the best way.

The pasteurization system used in the process according to the present invention allows a product to be obtained which does not undergo any variation in its taste properties as the pasteurization is effected immediately before packaging, i.e. dosage into cups.

This selection of the sequence of the operations is fundamental and is innovative as, in the state of the art, the pasteurization has always been programmed during the preparation of the syrup, with subsequent cooling before dosage and packaging. On the contrary, according to the present invention, the pasteurization is carried out immediately before dosage and without cooling the matrix, avoiding therefore the loss of aromatic components.

Another important aspect is that the pasteurization is effected at a temperature of 82°C - 83°C.

The dosage phase is carried out by means of volumetric dosage.

The packaging phase also has various important characteristics such as the particular type of container used. In fact, this container has specific features with respect to form and material.

The form is preferably that of a container with a very large opening and limited depth (the ratio between the diameter of the opening and depth is higher than or equal to 1,5 and, preferably, higher than or equal to 2). In fact, this type of container provides the optimum situation for producing grated-ice drink by means of static crystallization in a freezer.

The selection of the material for the container, on the other hand, takes into account the necessity of resisting high temperatures as the syrup, deriving from the pasteurization at 82-83°C, is immediately sent to the containers, which are then filled at a temperature not lower than 80°C. This causes a thermal shock which could deform the material of the container itself.

The use of plastic materials stable at high temperatures (such as polystyrene for example) clashes however with the acidity characteristics of the fruit syrup which would cause corrosion of the material.

The selection of a polypropylene with the following characteristics: a flow rate in the molten state (230°C, 2.16 kg) of 25 dg/mm and a density of 0.9 g/cm³, with a thickness of not less that 800 microns, guarantees a container capable of resisting high temperatures and the physico-chemical characteristics of the matrix, resulting in a perfect conservation.

Furthermore, the container is closed by applying a lid made of aluminum (and not plastic film) by means of hot welding. The aluminum top has a thickness less than or equal to 45 microns and must be coupled with polythene having a thickness equal to or higher than 30 microns.

This type of closure further facilitates hardening and crystallization. In fact, the indications for the best use of the alimentary product according to the present invention, specify that it should be placed upside-down in the freezer, and consequently with the closure resting on the shelf of the freezer.

In this way, due to the heat transmission coefficient of the aluminum (1.37 W/m), the aluminum top allows the maximum heat exchange between liquid and freezing environment to be obtained, thus enabling crystallization of the liquid and obtaining a specific ratio between the ice crystals and non-freezable liquid matter.

The plant for obtaining the product according to the present invention has been appropriately optimized for effecting the pasteurization, dosage and packaging phases described above.

In fact, the apparatus used for the process according to the present invention comprises a loading system of the containers allowing the sterility of the containers to be conserved until they are filled with the matrix, a preparation and loading system of the matrix, a pasteurization system, a volumetric dosage system and a hot welding system.

In particular, the volumetric dosage system is set up so as to operate at a temperature of 82°C. The zone between the volumetric dosage system of the liquid in the container and the lid application system is made sterile by the use of a laminar flow cap.

The subsequent freezing method is also important. In fact, the type of packaging and closure have been selected with a view to obtaining an optimum end result: in fact, they allow the maximum possible surface to be available to obtain thermal exchange between the liquid and cooling source.

An object of the present invention therefore also relates to a grated-ice drink or to a sorbet which can be obtained by means of the static freezing of the alimentary product according to the present invention. In particular, the static freezing is effected by placing the packaged alimentary product upside-down in the freezer, i.e. with the closure resting on the shelf of the freezer, as in this way the maximum heat exchange is obtained.

The same result can also be obtained with the usual position of the container, but over longer periods of time.

The main advantage of the product according to the present invention lies in the fact that it completely conserves its organolectic qualities, avoiding any type of contamination, for a period of at least one year.

An additional advantage consists in obtaining a product characterized in that, after static freezing, i.e. without the necessity of alternating rest and mixing phases, it has the typical characteristics of artisan-produced grated-ice drink or sorbet.

## Claims

1. An alimentary product, in the liquid state at room temperature and/or in the chain of cool (2-8°C), consisting of a chemically, physically and microbiologically stable mixture, conservable at room temperature and/or in the chain of cool (2-8°C) and having, after static freezing, crystals with dimensions less than or equal to 150 microns and a solid/liquid ratio ranging from 0.25 to 3, said alimentary product being preparable by means of a process which comprises the following phases:
1) preparation of a matrix comprising from 0.15% to 1% by weight of a mixture of stabilizers comprising at least one stabilizer selected among carrageenans, guar seed flour, carob seed flour, xanthane gum and/or pectin;
from 10% to 40% by weight of an aqueous solution of sugars at 65% of solids mixed with flavourings, fruit juices and/or sapid substances;
from 0.1% to 1.5% by weight of a mixture of crystallization retardants consisting of fluidifying agents based on glycerin and sorbitol;
from 0% to 1.5% by weight of at least one protein derivative selected among albumines from milk and/or eggs and/or cereals and/or legumes and/or their hydrolized;
2) a pasteurization phase at a temperature higher than 82°C for a time ranging from 3 to 10 minutes;
3) a dosage and hermetic packaging phase at a temperature higher than 80°C.

2. The alimentary product according to claim 1, **characterized in that** the aqueous solution of sugars comprises sucrose, lactose, dextrose, glucose and/or fructose syrup.

3. The alimentary product according to claim 1, **characterized in that** the aqueous solution of sugars mixed with flavourings, fruit juices and/or sapid substances comprises coffee extracts or milk of almonds as sapid substances or other aromatic natural extracts.

4. The alimentary product according to claim 1, **characterized in that** the matrix comprises from 0.15% to 0.65% by weight of the mixture of stabilizers selected from pectin and carob seed flour, from 25% to 30% by weight of the aqueous solution of sugars at 65% of solids mixed with flavourings, fruit juices and/or sapid substances and from 0.1% to 0.3% by weight of the mixture of crystallization retardants.

5. A process for the preparation of an alimentary product, in the liquid state at room temperature and/or in the chain of cool (2-8°C), consisting of a chemically, physically and microbiologically stable mixture, conservable at room temperature and/or in the chain of cool (2-8°C) and having, after static freezing, crystals with dimensions less than or equal to 150 microns and a solid/liquid ratio ranging from 0.25 to 3, which comprises the following phases:
1) preparation of a matrix comprising from 0.15% to 1% by weight of a mixture of stabilizers comprising at least one stabilizer selected from carrageenans, guar seed flour, carob seed flour, xanthane gum and/or pectin;
from 10% to 40% by weight of an aqueous solution of sugars at 65% of solids mixed with flavourings, fruit juices and/or sapid substances;
from 0.1% to 1.5% by weight of a mixture of crystallization retardants consisting of fluidifying agents based on glycerin and sorbitol;
from 0% to 1.5% by weight of at least one protein derivative selected among albumines from milk and/or eggs and/or cereals and/or legumes and/or their hydrolized;
2) a pasteurization phase at a temperature higher than 82°C for a time ranging from 3 to 10 minutes;
3) a dosage and hermetic packaging phase at a temperature higher than 80°C.

6. The process according to claim 5, **characterized in that** the pasteurization phase immediately precedes the dosage phase.

7. The process according to claim 5, **characterized in that** the pasteurization phase is carried out for a time ranging from 4 to 5 minutes.

8. The process according to claim 5, **characterized in that** the dosage phase is effected by means of volumetric dosage.

9. The process according to claim 5, **characterized in that** the packaging phase is carried out in an container which has a large opening and limited depth, with a ratio between the diameter of the opening and depth higher than or equal to 1.5, preferably higher than or equal to 2.

10. The process according to claim 5, **characterized in that** in the packaging phase the container is closed by applying an aluminum lid by means of hot welding.

11. A grated-ice drink obtainable by static freezing of the alimentary product according to claim 1, in absence of the component consisting of protein derivatives.

12. A sorbet obtainable by static freezing of the alimentary product according to claim 1, in presence of the component consisting of protein derivatives.

13. The grated-ice drink according to claim 11, **characterized in that** the static freezing is effected by placing the packaged alimentary product upside-down in the freezer, i.e. with the closure resting on the shelf of the freezer.

14. A process according to claim 10, **characterized in that** the container is a polypropylene container with a thickness greater than or equal to 800 microns, with an aluminum lid which has a thickness less than or equal to 45 microns and must be coupled with polythene having a thickness equal to or greater than 30 microns.

## Patentansprüche

1. Nahrungsmittelprodukt, das bei Raumtemperatur und/oder in der Kühlkette (2-8°C) im flüssigen Zustand ist, bestehend aus einem chemisch, physikalisch und mikrobiologisch stabilen Gemisch, das bei Raumtemperatur und/oder in der Kühlkette (2-8°C) konservierbar ist und nach dem statischen Gefrieren Kristalle mit einer Ausdehnung von höchstens 150 µm und ein fest/flüssig-Verhältnis im Bereich von 0,25 bis 3 hat, wobei das Nahrungsmittelprodukt durch ein Verfahren herstellbar ist, das die folgenden Stufen umfaßt:
1) Herstellen einer Matrix, enthaltend 0,15 bis 1 Gew.-% eines Gemisches von Stabilisatoren, die mindestens einen Stabilisator umfassen, der unter Carrageenanen, Guarkeimmehl, Johannisbrotkeimmehl, Xanthangummi und/oder Pectin ausgewählt ist;
10 bis 40 Gew.-% einer wässerigen Lösung von Zuckern mit 65 % Feststoffanteil im Gemisch mit Aromastoffen, Fruchtsäften und/oder Geschmacksstoffen;
0,1 bis 1,5 Gew.-% eines Gemisches von Kristallisationsverzögerern, die aus Verflüssigungsmitteln auf der Grundlage von Glycerin und Sorbitol bestehen;
0 bis 1,5 Gew.-% mindestens eines Proteinderivats, das unter Albuminen aus Milch und/oder Eiern und/oder Getreiden und/oder Leguminosen und/oder deren hydrolysierten Formen ausgewählt ist;
2) eine Pasteurisierungsstufe bei einer Temperatur über 82°C während 3 bis 10 Minuten;
3) eine Stufe, in der bei einer Temperatur über 80°C dosiert und hermetisch verpackt wird.

2. Nahrungsmittelprodukt nach Anspruch 1, **dadurch gekennzeichnet, daß** die wässerige Lösung von Zuckern Saccharose, Lactose, Dextrose, Glucose und/oder Fructosesirup enthält.

3. Nahrungsmittelprodukt nach Anspruch 1, **dadurch gekennzeichnet, daß** die wässerige Lösung von Zuckern im Gemisch mit Aromastoffen, Fruchtsäften und/oder Geschmacksstoffen Kaffeeextrakte oder Mandelmilch als Geschmacksstoffe oder andere aromatische natürliche Extrakte enthält.

4. Nahrungsmittelprodukt nach Anspruch 1, **dadurch gekennzeichnet, daß** die Matrix 0,15 bis 0,65 Gew.-% des Gemisches von Stabilisatoren, die unter Pectin und Johannisbrotkeimmehl ausgewählt sind, 25 bis 30 Gew.-% der wässerigen Lösung von Zuckern mit 65 % Feststoffanteil im Gemisch mit Aromastoffen, Fruchtsäften und/oder Geschmacksstoffen und 0,1 bis 0,3 Gew.-% des Gemisches von Kristallisationsverzögerern enthält.

5. Verfahren zur Herstellung eines Nahrungsmittelprodukts, das bei Raumtemperatur und/oder in der Kühlkette (2-8°C) im flüssigen Zustand ist und aus einem chemisch, physikalisch und mikrobiologisch stabilen Gemisch besteht, das bei Raumtemperatur und/oder in der Kühlkette (2-8°C) konservierbar ist und nach dem statischen Gefrieren Kristalle mit einer Ausdehnung von höchstens 150 µm und ein fest/flüssig-Verhältnis im Bereich von 0,25 bis 3 hat, welches die folgenden Stufen umfaßt:
1) Herstellen einer Matrix, enthaltend 0,15 bis 1 Gew.-% eines Gemisches von Stabilisatoren, die mindestens einen Stabilisator umfassen, der unter Carrageenanen, Guarkeimmehl, Johannisbrotkeimmehl, Xanthangummi und/oder Pectin ausgewählt ist;
10 bis 40 Gew.-% einer wässerigen Lösung von Zuckern mit 65 % Feststoffanteil im Gemisch mit Aromastoffen, Fruchtsäften und/oder Geschmacksstoffen;
0,1 bis 1,5 Gew.-% eines Gemisches von Kristallisationsverzögerern, die aus Verflüssigungsmitteln auf der Grundlage von Glycerin und Sorbitol bestehen;
0 bis 1,5 Gew.-% mindestens eines Proteinderivats, das unter Albuminen aus Milch und/oder Eiern und/oder Getreiden und/oder Leguminosen und/oder deren hydrolysierten Formen ausgewählt ist;
2) eine Pasteurisierungsstufe bei einer Temperatur über 82°C während 3 bis 10 Minuten;
3) eine Stufe, in der bei einer Temperatur über 80°C dosiert und hermetisch verpackt wird.

6. Verfahren nach Anspruch 5, **dadurch gekennzeichnet, daß** die Pasteurisierungsstufe unmittelbar vor der Dosierungsstufe durchgeführt wird.

7. Verfahren nach Anspruch 5, **dadurch gekennzeichnet, daß** die Pasteurisierungsstufe während 4 bis 5 Minuten durchgeführt wird.

8. Verfahren nach Anspruch 5, **dadurch gekennzeichnet, daß** die Dosierungsstufe mittels volumetrischer Dosierung durchgeführt wird.

9. Verfahren nach Anspruch 5, **dadurch gekennzeichnet, daß** die Verpackungsstufe in einem Behälter durchgeführt wird, der eine große Öffnung und eine begrenzte Tiefe aufweist, wobei das Verhältnis zwischen dem Durchmesser der Öffnung und der Tiefe mindestens 1,5, vorzugsweise mindestens 2 ist.

10. Verfahren nach Anspruch 5, **dadurch gekennzeichnet, daß** in der Verpackungsstufe der Behälter durch Anbringen eines Aluminiumdeckels mittels Heißschweißen geschlossen wird.

11. Getränk, das geriebenes Eis enthält, erhältlich durch statisches Gefrieren des Nahrungsmittelprodukts nach Anspruch 1 in Abwesenheit der Komponente, die aus Proteinderivaten besteht.

12. Speiseeis, erhältlich durch statisches Gefrieren des Nahrungsmittelprodukts nach Anspruch 1 in Anwesenheit der Komponente, die aus Proteinderivaten besteht.

13. Getränk, das geriebenes Eis enthält, nach Anspruch 11, **dadurch gekennzeichnet, daß** das statische Gefrieren dadurch bewirkt wird, daß das verpackte Nahrungsmittelprodukt mit der Oberseite nach unten in den Gefrierschrank, d.h. mit dem Verschluß auf den Gefrierfachboden des Gefrierschranks, gestellt wird.

14. Verfahren nach Anspruch 10, **dadurch gekennzeichnet, daß** der Behälter ein Polypropylenbehälter mit einer Dicke von mindestens 800 µm ist, wobei der Aluminiumdeckel eine Dicke von höchstens 45 µm hat und mit Polyethylen mit einer Dicke von mindestens 30 µm verbunden sein muß.

## Revendications

1. Produit alimentaire, à l'état liquide à température ambiante et/ou dans la chaîne du froid (2 à 8°C), consistant en un mélange chimiquement, physiquement et microbiologiquement stable, pouvant être conservé à température ambiante et/ou dans la chaîne du froid (2 à 8°C) et ayant, après une congélation statique, des cristaux ayant une taille inférieure ou égale à 150 microns et un rapport solide/liquide variant de 0,25 à 3, ledit produit alimentaire pouvant être préparé au moyen d'un procédé qui comprend les phases suivantes :
1) la préparation d'une matrice comprenant de 0,15% à 1% en poids d'un mélange de stabilisateurs comprenant au moins un stabilisateur sélectionné parmi les carraghénines, farine de grains de guar, farine de grains de caroube, de la gomme de xanthène et/ou de la pectine ;
de 10% à 40% en poids d'une solution aqueuse de sucres à 65% de solides mélangés avec des arômes, des jus de fruits et/ou des substances sapides ;
de 0,1% à 1,5% en poids d'un mélange de retardateurs de cristallisation consistant en des agents fluidifiants à base de glycérine et de sorbitol ;
de 0% à 1,5% en poids d'au moins un dérivé de protéine parmi les albumines en provenance de lait et/ou d'oeufs et/ou de céréales et/ou de légumes et/ou leurs produits hydrolysés.
2) une phase de pasteurisation à une température supérieure à 82°C pendant une période allant de 3 à 10 minutes ;
3) une phase de dosage et d'emballage hermétique à une température supérieure à 80°C.

2. Produit alimentaire selon la revendication 1, **caractérisé en ce que** la solution aqueuse de sucres comprend du saccharose, du lactose, du dextrose, du glucose et/ou un sirop de fructose.

3. Produit alimentaire selon la revendication 1, **caractérisé en ce que** la solution aqueuse de sucres mélangée aux arômes, jus de fruits et/ou substances sapides comprend des extraits de café ou de lait d'amandes comme substances sapides ou d'autres extraits naturels aromatiques.

4. Produit alimentaire selon la revendication 1, **caractérisé en ce que** la matrice comprend de 0,15% à 0,65% en poids du mélange de stabilisateurs sélectionnés parmi la pectine et la farine de grains de caroube, de 25% à 30% en poids de solides mélangés aux arômes, jus de fruits et/ou substances sapides et de 0,1% à 0,3% en poids du mélange de retardateurs de cristallisation.

5. Procédé pour la préparation d'un produit alimentaire, à l'état liquide à température ambiante et/ou dans la chaîne du froid (2 à 8°C), consistant en un mélange chimiquement, physiquement et microbiologiquement stable, pouvant être conservé à température ambiante et/ou dans la chaîne du froid (2 à 8°C) et ayant, après une congélation statique, des cristaux ayant une taille inférieure ou égale à 150 microns et un rapport solide/liquide variant de 0,25 à 3, qui comprend les phases suivantes :
1) la préparation d'une matrice comprenant de 0,15% à 1% en poids d'un mélange de stabilisateurs comprenant au moins un stabilisateur sélectionné parmi les carraghénines, farine de grains de guar, farine de grains de caroube, de la gomme de xanthène et/ou de la pectine ;
de 10% à 40% en poids d'une solution aqueuse de sucres à 65% de solides mélangés avec des arômes, des jus de fruits et/ou des substances sapides ;
de 0,1% à 1,5% en poids d'un mélange de retardateurs de cristallisation consistant en des agents fluidifiants à base de glycérine et de sorbitol ;
de 0% à 1,5% en poids d'au moins un dérivé de protéine parmi les albumines en provenance de lait et/ou d'oeufs et/ou de céréales et/ou de légumes et/ou leurs produits hydrolysés.
2) une phase de pasteurisation à une température supérieure à 82°C pendant une période allant de 3 à 10 minutes ;
3) une phase de dosage et d'emballage hermétique à une température supérieure à 80°C.

6. Procédé selon la revendication 5, **caractérisé en ce que** la phase de pasteurisation a lieu juste avent la phase de dosage.

7. Procédé selon la revendication 5, **caractérisé en ce que** la phase de pasteurisation est effectuée pendant une période allant de 4 à 5 minutes.

8. Procédé selon la revendication 5, **caractérisé en ce que** la phase de dosage est effectuée au moyen d'un dosage volumétrique.

9. Procédé selon la revendication 5, **caractérisé en ce que** la phase d'emballage est effectuée dans un conteneur ayant une grande ouverture et une profondeur limitée, avec un rapport entre le diamètre de l'ouverture et la profondeur supérieur ou égal à 1,5, de préférence supérieur ou égal à 2.

10. Procédé selon la revendication 5, **caractérisé en ce que** pendant la phase d'emballage, le conteneur est fermé en appliquant un couvercle en aluminium au moyen d'une soudure thermique.

11. Boisson avec de la glace pilée pouvant être obtenue par congélation statique du produit alimentaire décrit selon la revendication 1, en l'absence du composant consistant en des dérivés de protéine.

12. Sorbet pouvant être obtenu par congélation statique du produit alimentaire selon la revendication 1, en la présence du composant consistant en des dérivés de protéine.

13. Boisson avec de la glace pilée selon la revendication 11, **caractérisée en ce que** la congélation statique est effectuée en plaçant le produit alimentaire emballé à l'envers dans le congélateur, c'est-à-dire la fermeture reposant sur l'étagère du congélateur.

14. Procédé selon la revendication 10, **caractérisé en ce que** le conteneur est un conteneur en polypropylène avec une épaisseur supérieure ou égale à 800 microns, avec un couvercle en aluminium qui a une épaisseur inférieure ou égale à 45 microns devant être couplé avec du polythène ayant une épaisseur supérieure ou égale à 30 microns.
